# EUROPEAN PATENT SPECIFICATION

(11) **EP 4 016 032 B1**
(45) Date of publication and mention of the grant of the patent: **02.04.2025**
(21) Application number: 21211693.3
(22) Date of filing: 01.12.2021
(51) Int. Cl.: G01L 17/00

(54) **SYSTEM AND METHOD FOR EVALUATION OF TIRE PRESSURE**
SYSTEM UND VERFAHREN ZUR REIFENDRUCKBEWERTUNG
SYSTÈME ET PROCÉDÉ D'ÉVALUATION DE LA PRESSION DES PNEUS

(30) Priority: 15.12.2020 US 202017122134
(43) Date of publication of application: 22.06.2022
(73) Proprietor: The Goodyear Tire & Rubber Company, Akron, OH 44316 (US)
(72) Inventor: COLLIN, Pierre Jules A., 6741 Vance (BE); GANGULY, Abhijit, Hudson 44236 (US); PIETSCH, Andreas Michale Thomas, 48249 Duelmen (DE); BUSSMANN, Stefan, 46284 Dorsten (DE)
(74) Representative: Kutsch, Bernd

(56) References cited:
- EP-A1- 0 656 269
- EP-A1- 0 997 713
- DE-A1- 102012 205 694
- US-A1- 2017 350 781

## Description

### Field of the Invention

The invention relates generally to tire monitoring. More particularly, the invention relates to systems and methods that monitor the air pressure inside of a vehicle tire when the vehicle is driven over a reader or station. Specifically, the invention is directed to a drive over reader system that provides an evaluation of tire pressure using a pressure differential between tires.

### Background of the Invention

Multiple pneumatic tires support a vehicle and are designed to perform for relatively long periods of time. However, even long-life pneumatic tires are subject to air pressure losses due to puncture by nails and other sharp objects, temperature changes, and/or diffusion of air through the tire itself.

Since air diffusion reduces tire pressure over time, the pneumatic tires may repeatedly become underinflated. Accordingly, vehicle operators or fleet operators must in turn repeatedly act to maintain recommended air pressures in the vehicle tires to avoid reduced fuel economy, tire life, and/or vehicle braking and handling performance. To assist in the maintenance of recommended tire pressure, various types of systems that monitor the air pressure inside the tire have been developed.

One approach to the monitoring and/or measurement of tire pressure has been to measure the pressure of a tire mounted on a vehicle as the vehicle drives over a station and the tire passes over a sensor mounted in the station, which is known in the art as a drive over reader. As the tire drives onto the drive over reader, the reader measures the pneumatic pressure inside the tire. For example, an array of load sensors may be disposed in the drive over reader, which measures the force exerted by the tire.

The tire pressure is determined from the measured force and may incorporate tire information and/or vehicle information. The advantages of determining tire pressure with a drive over reader include positioning of the tire over the reader contact surface during a short time interval, which enables the pressure to be determined without invading or accessing the tire cavity.

As with any measurement technique, the precision and repeatability of the pressure determination by the drive over reader are important considerations. For example, the determination of tire pressure by a drive over reader may be influenced by tire temperature. Therefore, after the pressure of a tire has been determined by the drive over reader, it is beneficial to evaluate the pressure measurements of the drive over reader.

As a result, there is a need in the art for a system and method of evaluating the pressure that is determined by a drive over reader.

US 2017/350781 A1 describes a system in accordance with the preamble of claim 1.

Similar systems are also known from EP 0 656 269 A1 and DE 10 2012 205694 A1.

EP 0 997 713 A1 describes a traffic monitoring system including axle weight measurement, tire pressure monitoring and suspension monitoring.

### Summary of the Invention

The invention relates to a system in accordance with claim 1 and to a method in accordance with claim 6.

Dependent claims refer to preferred embodiments of the invention.

According to an aspect of an exemplary embodiment of the invention, a system for evaluation of pressure of at least two tires supporting a vehicle is provided. The system includes a drive over reader, which includes a sensor array. A first pressure indication, which is a pressure indication for a first tire, is determined by the drive over reader. A second pressure indication, which is a pressure indication for a second tire, is determined by the drive over reader. A maximum differential threshold is provided. A pressure differential is determined by comparing the first pressure indication to the second pressure indication. A notice is generated by the drive over reader when the pressure differential exceeds the maximum differential threshold.

According to another aspect of an exemplary embodiment of the invention, a method for evaluation of pressure of at least two tires supporting a vehicle is provided. The method includes the step of providing a drive over reader, which includes a sensor array. A first pressure indication is determined with the drive over reader, and is a pressure indication for a first tire. A second pressure indication is determined with the drive over reader, and is a pressure indication for a second tire. A maximum differential threshold is provided. A pressure differential is determined by comparing the first pressure indication to the second pressure indication. A notice is generated with the drive over reader when the pressure differential exceeds the maximum differential threshold.

### Brief Description of the Drawings

The invention will be described by way of example and with reference to the accompanying drawings, in which:
Figure 1 is a schematic perspective view of an exemplary embodiment of the system for evaluating the pressure of a tire of the present invention, shown installed in the ground and with a vehicle approaching the system;
Figure 2 is a schematic perspective view of the system for evaluating the pressure of a tire of the present invention shown in Figure 1;
Figure 3 is a schematic representation of an array of load sensors of the system shown in Figure 1;
Figure 4 is a schematic representation of an aspect of the system for evaluating the pressure of a tire of the present invention shown in Figure 1;
Figure 5 is a schematic representation of another aspect of the system for evaluating the pressure of a tire of the present invention shown in Figure 1; and
Figure 6 is a schematic representation of a notification portion of the system for evaluating the pressure of a tire of the present invention shown in Figure 1.

Similar numerals refer to similar parts throughout the drawings.

### Definitions

"Axial" and "axially" means lines or directions that are parallel to the axis of rotation of the tire.

"Circumferential" means lines or directions extending along the perimeter of the surface of the annular tread perpendicular to the axial direction.

"Equatorial centerplane (CP)" means the plane perpendicular to the tire's axis of rotation and passing through the center of the tread.

"Footprint" means the contact patch or area of contact created by the tire tread with a flat surface as the tire rotates or rolls.

"Inboard side" means the side of the tire nearest the vehicle when the tire is mounted on a wheel and the wheel is mounted on the vehicle.

"Lateral" means an axial direction.

"Lateral edges" means a line tangent to the axially outermost tread contact patch or footprint of the tire as measured under normal load and tire inflation, the lines being parallel to the equatorial centerplane.

"Net contact area" means the total area of ground contacting tread elements between the lateral edges around the entire circumference of the tread of the tire divided by the gross area of the entire tread between the lateral edges.

"Outboard side" means the side of the tire farthest away from the vehicle when the tire is mounted on a wheel and the wheel is mounted on the vehicle.

"Radial" and "radially" means directions radially toward or away from the axis of rotation of the tire.

"PSI" means pounds per square inch. 1 PSI is equal to 6895 Pascal.

### Detailed Description of Preferred Embodiment of the Invention

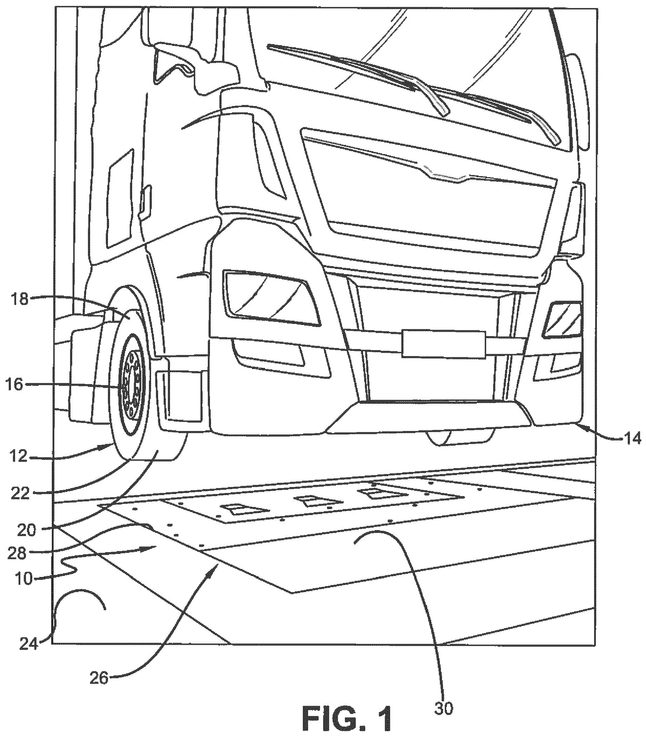

With reference to Figures 1 through 6, an exemplary embodiment of the system 10 for evaluation of the pressure of a tire of the present invention is indicated. As shown in Figure 1, the system 10 evaluates the pressure of each tire 12 supporting a vehicle 14. It is to be understood that the vehicle 14 may be any vehicle type and is shown by way of example as a commercial vehicle. In addition, the vehicle 14 may include any number of tires 12, and the system 10 may evaluate the pressure in any number of the tires on the vehicle.

The tires 12 are preferably of conventional construction, and each tire is mounted on a respective wheel 16 as known to those skilled in the art. Each tire 12 includes a pair of sidewalls 18 that extend to a circumferential tread 20. As each tire 12 rolls over the ground 24, a footprint 22 is created, which is the area of contact of the tread 20 with the ground.

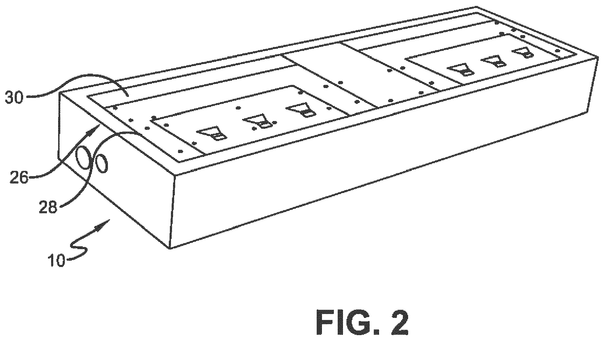

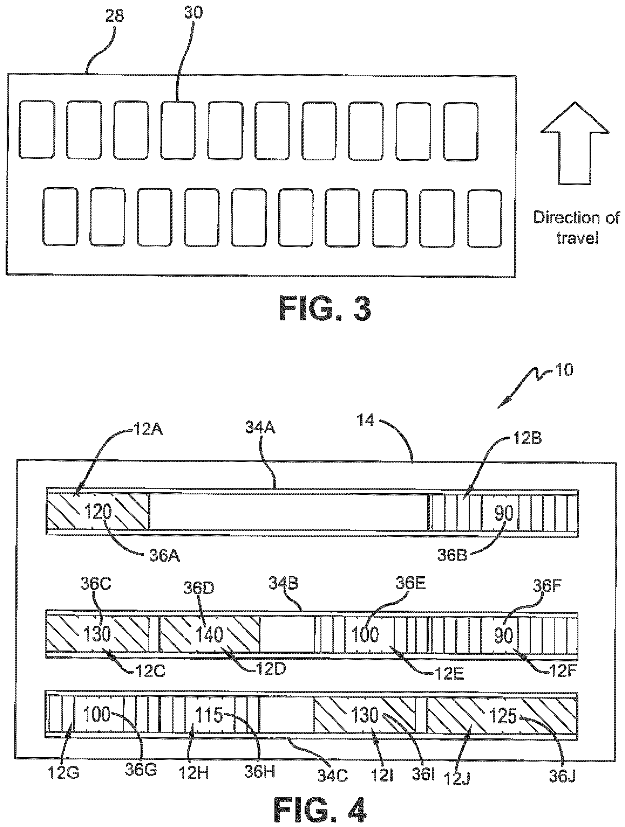

With additional reference to Figures 2 and 3, the system 10 includes a drive over reader 26, which is mounted in or on the ground 24. The drive over reader 26 includes a housing 28 and at least one sensor 30 mounted in the housing. Preferably, an array of load sensors 30 is mounted in the housing 28. The driver of the vehicle 14 directs the vehicle over the drive over reader 26, which causes each tire 12 to roll over the reader. When the tire 12 is positioned over the sensor array 30, the array measures the force exerted by the tire.

The pressure of the tire 12 is determined from the force measured by the sensor array 30, and may incorporate tire information and/or vehicle information. An exemplary technique for determining the pressure of the tire 12 is described in U.S. Patent No. 7,942,048. By employing the drive over reader 26, the pressure of the tire 12 is determined without invading or accessing the tire cavity. The drive over reader 26 includes, or is in electronic communication with, a processor to determine the pressure of the tire 12 from the sensor array 30.

As with any measurement technique, the precision and repeatability of the pressure determination by the drive over reader 26 are important considerations. Therefore, the system 10 is employed after the pressure of each tire 12 has been determined by the drive over reader 26 to evaluate the pressure measurements of the drive over reader. As mentioned above, the system 10 includes and thus is incorporated into the drive over reader 26.

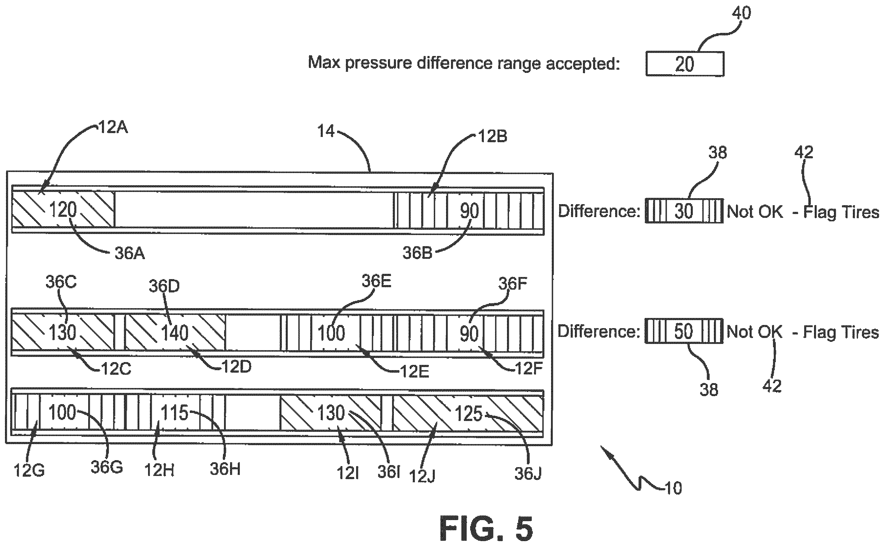

Referring to Figures 4 and 5, the system 10 provides an evaluation of tire pressure using a pressure differential 38 between tires 12. More particularly, the drive over reader 26 determines a pressure indication 36 for each tire 12 on the vehicle 14. By way of example, the vehicle 14 may include two front tires 12A and 12B, each of which is mounted on a front axle 34A, and eight additional tires mounted in dual-tire configurations on tandem axles 34B and 34C. The front tandem axle 34B includes two tires 12C and 12D on the left side of the axle, and two tires 12E and 12F on the right side of the axle. The rear tandem axle 34C includes two tires 12G and 12H on the left side of the axle, and two tires 12I and 12J on the right side of the axle.

In this example, for the front axle 34A, the drive over reader 26 provides a first pressure indication 36A of 120 pounds per square inch (PSI) for the left tire 12A, and a second pressure indication 36B of 90 PSI for the right tire 12B. For the front tandem axle 34B, a third pressure indication 36C of 130 PSI is provided for the tire 12C, a fourth pressure indication 36D of 140 PSI is provided for the tire 12D, a fifth pressure indication 36E of 100 PSI is provided for the tire 12E, and a sixth pressure indication 36F of 90 PSI is provided for the tire 12F. For the rear tandem axle 34C, a seventh pressure indication 36G of 100 PSI is provided for the tire 12G, an eighth pressure indication 36H of 115 PSI is provided for the tire 12H, a ninth pressure indication 36I of 130 PSI is provided for the tire 12I, and a tenth pressure indication 36J of 125 PSI is provided for the tire 12J.

The system 10 evaluates the pressure indications 36 based upon a pressure differential 38 between tires 12. A maximum differential threshold 40 is determined for the system and is set at 20 PSI in this example. Any of the tires 12 may be compared with one another. For example, two tires 12 on the same axle 34 may be compared to one another, such as the left tire 12A and the right tire 12B on the front axle 34A. Because the left tire 12A has a pressure indication 36A of 120 PSI and the right tire 12B has a pressure indication 36B of 90 PSI, the pressure differential 38 between the tires is 30 PSI. The maximum differential threshold 40 is 20 PSI, and the pressure differential 38 thus exceeds the threshold. When the pressure differential 38 exceeds the threshold 40, a notice or flag 42 is generated that the tires 12 being compared have an unacceptable pressure differential and are in a pressure condition that is not optimum for driving.

Also in the system 10, multiple tires 12 on multiple axles 34 may be compared with one another. For example, the tires 12C, 12D, 12E and 12F on the front tandem axle 34B, and the tires 12G, 12H, 12I and 12J on the rear tandem axle 34C may all be compared to one another. The maximum indicated pressure 36 in this group of tires 12 is the fourth pressure indication 36D of 140 PSI for the tire 12D, and the minimum indicated pressure in this group of tires is the sixth pressure indication 36F of 90 PSI for the tire 12F, yielding a maximum pressure differential 38 of 50 PSI. The maximum differential threshold 40 is 20 PSI, and the maximum pressure differential 38 thus exceeds the threshold. When the pressure differential 38 exceeds the threshold 40, the notice 42 is generated that the tires 12 in this group have an unacceptable pressure differential and are in a pressure condition that is not optimum for driving.

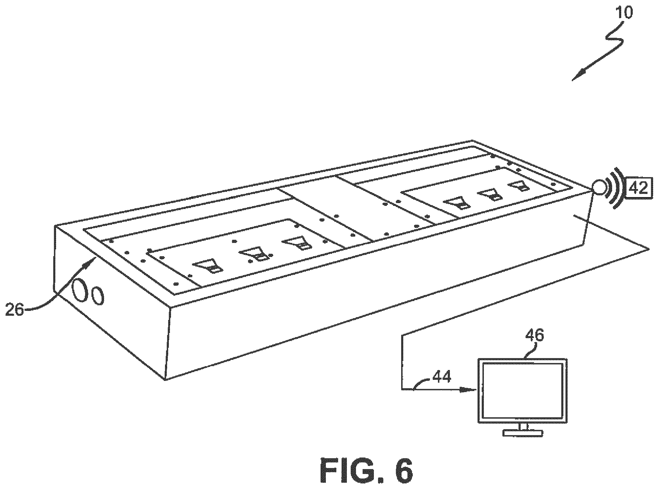

Turning to Figure 6, the system 10 includes and is incorporated into the drive over reader 26. When the notice 42 is generated, it is sent through wireless or wired transmission 44 along with any other pertinent drive over reader output to a receiving device 46. The receiving device 46 may be any device that communicates the notice 42 to a technician, vehicle operator, or a fleet manager, such as a computer with a display terminal, a user device, and/or a fleet management server.

In this manner, the system for evaluation of the pressure of a tire 10 provides an evaluation of the indicated tire pressure 36 as determined by the drive over reader 26 using a pressure differential 38 between tires 12. The pressure differential 38 may be between all of the tires 12 or may be limited to a limited number of specifically identified tires. When the maximum pressure differential 38 is greater than a predetermined threshold 40, a notification 42 is generated.

The system 10 evaluates the precision and repeatability of the pressure determination 36 by the drive over reader 26, and evaluates the pressure of the tires 12 in a current operating condition without the need to invade or access the tire cavity. The system 10 provides an evaluation of the tires 12 at any tire temperature, as opposed to having to make reference to a recommended cold pressure (RCP) and correct the measured value for temperature compensation.

The present invention also includes a method for evaluating the pressure of a tire 12. The method includes steps in accordance with the description that is presented above and shown in Figure 1 through 6.

## Claims

1. A system for evaluation of pressure of at least two tires (12) supporting a vehicle (14), the system (10) including:
a drive over reader (26) including a sensor array (30);
a first pressure indication, the first pressure indication being a pressure indication for a first tire determined by the drive over reader (26);
a second pressure indication, the second pressure indication being a pressure indication for a second tire determined by the drive over reader (26);
a maximum differential threshold (40);
a pressure differential (38), the pressure differential being determined by comparing the first pressure indication to the second pressure indication; and
a notice (42) generated by the drive over reader (26) when the pressure differential (38) exceeds the maximum differential threshold (40);
wherein the first tire is disposed on a first axle and the second tire is disposed on a second axle; **characterized in that**
the system (10) is configured to determine the pressure differential (38) by comparing a maximum indicated pressure from the plurality of tires to a minimum indicated pressure from the plurality of tires.

2. The system of claim 1, wherein the system (10) is configured to transmit the notice to a receiving device, the receiving device including at least one of a computer with a display terminal, a user device, and a fleet management server.

3. The system of at least one of the previous claims, wherein the system (10) is configured to evaluate the pressure of the tires (12) without invading a cavity of each tire (12).

4. The system of at least one of the previous claims, wherein the system (10) is configured to evaluate the pressure of the tires (12) at any tire temperature the tires (12) may have or be exposed to.

5. The system of at least one of the previous claims, wherein the sensor array (30) includes a plurality of load sensors and wherein each pressure indication is determined from force measurements generated by the sensor array (30).

6. A method for evaluation of pressure of at least two tires (12) supporting a vehicle (14), the method including the steps of:
providing a drive over reader (26) including a sensor array (30);
determining a first pressure indication with the drive over reader (26), the first pressure indication being a pressure indication for a first tire;
determining a second pressure indication with the drive over reader (26), the second pressure indication being a pressure indication for a second tire;
providing a maximum differential threshold (40);
determining a pressure differential (38) by comparing the first pressure indication to the second pressure indication; and
generating a notice (42) with the drive over reader (26) when the pressure differential (38) exceeds the maximum differential threshold (40);
wherein the first tire is disposed on a first axle and the second tire is disposed on a second axle; **characterized in that**
the step of determining the pressure differential (38) includes comparing a maximum indicated pressure from the plurality of tires to a minimum indicated pressure from the plurality of tires.

7. The method of claim 6, further comprising the step of transmitting the notice (42) to a receiving device, the receiving device including at least one of a computer with a display terminal, a user device, and a fleet management server.

8. The method of at least one of the claims 6 or 7, wherein the pressure of the tires (12) is evaluated without invading a cavity of each tire.

9. The method of at least one of the claims 6 to 8, wherein the pressure of the tires (12) is evaluated at any tire temperature the tires (12) may have or be exposed to.

10. The method of at least one of the claims 6 to 9, wherein the sensor array (30) includes a plurality of load sensors, and wherein each pressure indication is determined from force measurements generated by the sensor array (30).

## Patentansprüche

1. System zum Bewerten des Drucks von mindestens zwei Luftreifen (12), die ein Fahrzeug (14) stützen, wobei das System (10) Folgendes umfasst:
ein Überfahrlesegerät (26), das eine Reihe von Sensoren (30) umfasst;
einen ersten angezeigten Druck, wobei der erste angezeigte Druck einen angezeigten Druck für einen ersten Reifen darstellt, der durch das Überfahrlesegerät (26) bestimmt wird;
einen zweiten angezeigten Druck, wobei der zweite angezeigte Druck einen angezeigten Druck für einen zweiten Luftreifen darstellt der durch das Überfahrlesegerät (26) bestimmt wird;
eine maximale Differentialschwelle (40);
eine Druckdifferenz (38), wobei der Druckunterschied bestimmt wird, indem der erste angezeigte Druck mit dem zweiten angezeigten Druck verglichen wird; und
eine Meldung (42), die von dem Überfahrlesegerät (26) erzeugt wird, wenn das Druckdifferential (38) die maximale Differentialschwelle (40) überschreitet;
wobei der erste Luftreifen auf einer ersten Achse angebracht ist und der zweite Luftreifen auf einer zweiten Achse angebracht ist; **dadurch gekennzeichnet, dass**
das System (10) so konfiguriert ist, dass es das Druckdifferential (38) durch das Vergleichen eines maximalen Drucks, der von den mehreren Luftreifen angezeigt wird, mit einem minimalen Druck, der von den mehreren Luftreifen angezeigt wird, bestimmt.

2. System nach Anspruch 1, wobei das System (10) so konfiguriert ist, dass es die Meldung an eine Empfangsvorrichtung weiterleitet, wobei die Empfangsvorrichtung mindestens eines von einem Computer, der ein Anzeigeterminal umfasst, einem Benutzergerät oder einem Flottenmanagement-Server umfasst.

3. System nach mindestens einem der vorhergehenden Ansprüche, wobei das System (10) so konfiguriert ist, dass es den Druck der Reifen (12) bewertet, ohne in einen Hohlraum jedes Reifens (12) einzudringen.

4. System nach mindestens einem der vorhergehenden Ansprüche, wobei das System (10) so konfiguriert ist, dass es den Reifendruck der Reifen (12) bei jeder Reifentemperatur, der die Reifen (12) ausgesetzt sein könnten oder sind, bewertet.

5. System nach mindestens einem der vorhergehenden Ansprüche, wobei die Reihe von Sensoren (30) eine Anzahl von Lastsensoren umfasst und wobei jeder angezeigte Druck aus Kraftmessungen bestimmt wird, die von der Reihe von Sensoren (30) erzeugt werden.

6. Verfahren zum Bewerten des Drucks von mindestens zwei Luftreifen (12), die ein Fahrzeug (14) stützen, wobei das Verfahren die folgenden Schritte umfasst:
das Bereitstellen eines Überfahrlesegeräts (26), das eine Reihe von Sensoren (30) umfasst;
das Bestimmen eines ersten angezeigten Drucks mit dem Überfahrlesegerät (26), wobei der erste angezeigte Druck einen angezeigten Druck für einen ersten Luftreifen darstellt;
das Bestimmen eines zweiten angezeigten Drucks mit dem Überfahrlesegerät (26), wobei der zweite angezeigte Druck einen angezeigte Druck für einen zweiten Luftreifen darstellt;
das Bereitstellen einer maximalen Differentialschwelle (40);
das Bestimmen einer Druckdifferenz (38), indem der erste angezeigte Druck mit dem zweiten angezeigten Druck verglichen wird; und
das Erzeugen einer Meldung (42), die von dem Überfahrlesegerät (26) erzeugt wird, wenn das Druckdifferential (38) die maximale Differentialschwelle (40) überschreitet;
wobei der erste Luftreifen auf einer ersten Achse angebracht ist und der zweite Luftreifen auf einer zweiten Achse angebracht ist; **dadurch gekennzeichnet, dass**
der Schritt des Bestimmens der Druckdifferenz (38) das Vergleichen eines maximalen Drucks, der von den mehreren Luftreifen angezeigt wird, mit einem minimalen Druck, der von den mehreren Luftreifen angezeigt wird, umfasst.

7. Verfahren nach Anspruch 6, das weiterhin den Schritt des Übertragens der Meldung (42) an eine Empfangsvorrichtung umfasst, wobei die Empfangsvorrichtung mindestens eines von einem Computer, der ein Anzeigeterminal umfasst, einem Benutzergerät oder einem Flottenmanagement-Server umfasst.

8. Verfahren nach mindestens einem der Ansprüche 6 oder 7, wobei der Druck der Reifen (12) bewertet wird, ohne in einen Hohlraum jedes Reifens einzudringen.

9. Verfahren nach mindestens einem der Ansprüche 6 bis 8, wobei der Druck der Reifen (12) bei jeder Reifentemperatur bewertet wird, der die Reifen (12) ausgesetzt sein könnten oder sind.

10. Verfahren nach mindestens einem der Ansprüche 6 bis 9, wobei die Reihe von Sensoren (30) eine Anzahl von Lastsensoren umfasst und wobei jeder angezeigte Druck aus Kraftmessungen bestimmt wird, die von der Reihe von Sensoren (30) erzeugt werden.

## Revendications

1. Système destiné à l'évaluation de la pression d'au moins deux bandages pneumatiques (12) qui supportent un véhicule (14), le système (10) englobant :
un lecteur sollicité lors d'un passage par-dessus lui-même (26) qui englobe une panoplie de capteurs (30) ;
une première indication de pression, la première indication de pression représentant une indication de pression pour un premier bandage pneumatique, qui est déterminée par le lecteur sollicité lors d'un passage par-dessus lui-même (26) ;
une deuxième indication de pression, la deuxième indication de pression représentant une indication de pression pour un deuxième bandage pneumatique, qui est déterminée par le lecteur sollicité lors d'un passage par-dessus lui-même (26) ;
un seuil différentiel maximal (40) ;
un différentiel de pression (38), le différentiel de pression étant déterminé en comparant la première indication de pression à la deuxième indication de pression ; et
un avis (42) généré par le lecteur sollicité lors d'un passage par-dessus lui-même (26) lorsque le différentiel de pression (38) dépasse le seuil différentiel maximal (40) ;
dans lequel le premier bandage pneumatique est disposé sur un premier essieu et le deuxième bandage pneumatique est disposé sur un deuxième essieu ; **caractérisé en ce que**
le système (10) est configuré pour déterminer le différentiel de pression (38) en comparant une pression maximale indiquée à partir desdits plusieurs bandages pneumatiques à une pression minimale indiquée à partir desdits plusieurs bandages pneumatiques.

2. Système selon la revendication 1, dans lequel le système (10) est configuré pour transmettre l'avis à un dispositif de réception, le dispositif de réception englobant au moins un élément choisi parmi un ordinateur qui comprend un terminal d'affichage, un dispositif utilisateur et un serveur de gestion de flotte.

3. Système selon au moins une des revendication précédentes, dans lequel le système (10) est configuré pour évaluer la pression des bandages pneumatiques (12) sans devoir s'introduire dans une cavité de chaque bandage pneumatique (12).

4. Système selon au moins une des revendication précédentes, dans lequel le système (10) est configuré pour évaluer la pression des bandages pneumatiques (12) à n'importe quelle température de bandage pneumatique à laquelle les bandages pneumatiques (12) pourraient être ou sont exposés.

5. Système selon au moins une des revendication précédentes, dans lequel la panoplie de capteurs (30) englobe un certain nombre de capteurs de charge et dans lequel chaque indication de pression est déterminée à partir de mesures de force qui sont générées par la panoplie de capteurs (30).

6. Procédé destiné à évaluer la pression d'au moins deux bandages pneumatiques (12) qui supportent un véhicule (14), le procédé englobant les étapes au cours desquelles :
on procure un lecteur sollicité lors d'un passage par-dessus lui-même (26) qui englobe une panoplie de capteurs (30) ;
on détermine une première indication de pression avec le lecteur sollicité lors d'un passage par-dessus lui-même (26), la première indication de pression représentant une indication de pression pour un premier bandage pneumatique ;
on détermine une deuxième indication de pression avec le lecteur sollicité lors d'un passage par-dessus lui-même (26), la deuxième indication de pression représentant une indication de pression pour un deuxième bandage pneumatique ;
on procure un seuil différentiel maximal (40) ;
on détermine un différentiel de pression (38) en comparant la première indication de pression à la deuxième indication de pression ; et
on génère un avis (42) avec le lecteur sollicité lors d'un passage par-dessus lui-même (26) lorsque le différentiel de pression (38) dépasse le seuil différentiel maximal (40) ;
dans lequel le premier bandage pneumatique est disposé sur un premier essieu et le deuxième bandage pneumatique est disposé sur un deuxième essieu ; **caractérisé en ce que**
l'étape au cours de laquelle on détermine le différentiel de pression (38) englobe le fait de comparer une pression maximale indiquée à partir desdits plusieurs bandages pneumatiques à une pression minimale indiquée à partir desdits plusieurs bandages pneumatiques.

7. Procédé selon la revendication 6 qui comprend en outre l'étape au cours de laquelle on transmet l'avis (42) à un dispositif de réception, le dispositif de réception englobant au moins un élément choisi parmi un ordinateur qui comprend un terminal d'affichage, un dispositif utilisateur et un serveur de gestion de flotte.

8. Procédé selon au moins une des revendications 6 ou 7, dans lequel on évalue la pression des bandages pneumatiques (12) sans devoir s'introduire dans une cavité de chaque bandage pneumatique.

9. Procédé selon au moins une des revendications 6 à 8, dans lequel on évalue la pression des bandages pneumatiques (12) à n'importe quelle température de bandage pneumatique à laquelle les bandages pneumatiques (12) pourraient être ou sont exposés.

10. Procédé selon au moins une des revendications 6 à 9, dans lequel la panoplie de capteurs (30) englobe un certain nombre de capteurs de charge et dans lequel chaque indication de pression est déterminée à partir de mesures de force qui sont générées par la panoplie de capteurs (30).
